# EUROPÄISCHE PATENTSCHRIFT

(11) **EP 4 010 164 B1**
(45) Veröffentlichungstag und Bekanntmachung des Hinweises auf die Patenterteilung: **02.08.2023**
(21) Anmeldenummer: 21739056.6
(22) Anmeldetag: 30.06.2021
(51) Int. Cl.: B29C 45/17, B29C 45/66, B29C 45/68

(54) **FORMSCHLIESSEINHEIT FUER EINE SPRITZGIESSMASCHINE ZUR VERARBEITUNG VON KUNSTSTOFFEN**
MOULD-CLOSING UNIT FOR AN INJECTION-MOULDING MACHINE FOR PROCESSING PLASTICS
UNITÉ DE FERMETURE DE MOULE POUR UNE MACHINE DE MOULAGE PAR INJECTION POUR TRAITER DES MATIÈRES PLASTIQUES

(30) Priorität: 30.06.2020 DE 102020117168
(43) Veröffentlichungstag der Anmeldung: 15.06.2022
(73) Patentinhaber: Arburg GmbH + Co KG, 72290 Loßburg (DE)
(72) Erfinder: BLETSCHER, Rainer, 72270 Baiersbronn (DE); DUFFNER, Eberhard, 72181 Starzach (DE)
(74) Vertreter: RPK Patentanwälte Reinhardt und Kaufmann Partnerschaft mbB
(86) Internationale Anmeldenummer: PCT/EP2021/068000
(87) Internationale Veröffentlichungsnummer: WO 2022/003025

(56) Entgegenhaltungen:
- DE-A1-102007 023 337
- DE-A1-102014 002 474
- DE-T5-112016 000 803
- JP-A- 2016 010 885
- US-A- 4 948 358

## Beschreibung

Die Erfindung betrifft eine Formschließeinheit für eine Spritzgießmaschine zur Verarbeitung von Kunststoffen und anderer plastifizierbarer Massen mit den Merkmalen nach dem Oberbegriff des Anspruches 1.

Formschließeinheiten von Spritzgießmaschinen dienen als Bestandteil einer Spritzgießmaschine üblicherweise zum Öffnen und Schließen einer Spritzgießform entlang einer Längsrichtung der Maschine. Dazu kann ein verfahrbarer Formträger, auch beweglicher Formträger genannt, mittels einer Antriebsmechanik wie z.B. einem Schließmechanismus und einem entsprechenden Antrieb entlang der Längsrichtung der Formschließeinheit zyklisch zwischen einer die Spritzgießform betreffenden Öffnungs- und Schließposition bewegt werden. Um diese Bewegung zu ermöglichen, ist ein entsprechendes Linearlager bzw. eine Linearführung erforderlich, durch das bzw. die auch eine Gewichtskraft des verfahrbaren Formträgers auf einem Maschinenfuß abgestützt werden kann.

Aus der dem Oberbegriff des Anspruches 1 zugrunde liegenden US 4,948, 358 A ist eine Formschließeinheit für eine Spritzgießmaschine mit einem in einer Längsrichtung der Formschließeinheit verfahrbaren Formträger bekannt, der zwischen sich und einem weiteren Formträger einen Formspannraum zur Aufnahme einer Spritzgießform ausbildet. Der verfahrbare Formträger ist mittels einer Lastaufnahme auf einem Maschinenfuß auf einer Linearführung abgestützt. Die Lastaufnahme weist oberhalb der Linearführung einen Anlenkbereich für den verfahrbaren Formträger auf, der mit dem verfahrbaren Formträger verbunden ist und dessen Steifigkeit in Längsrichtung höher ist als in einer Richtung quer zur Längsrichtung (siehe auch WO 1998/041380 A1, Fig 1-2; DE 11 2016 000 803 T5, Fig. 1-3; JP 2016-010885 A, Fig. 2-3))

Die DE 10 2007 023 337 A1 offenbart eine abgerundete Form einer Lastaufnahme, welche die Führung mit dem Formträger verbindet. Allerdings lässt sich die genaue Form des Querschnitts und seine Ausrichtung nicht entnehmen.

Aus der WO 2009/051095 A1, Fig. 3-4, ist eine vergleichbare Formschließeinheit bekannt, bei der sich der Anlenkbereich in einer Höhe von 20 bis 70%, vorzugsweise 40 bis 60% der Höhe des verfahrbaren Formträgers befindet und damit etwa in Höhe der bei Wärmeausdehnung neutralen Faser (siehe auch DE 10 2014 002 474 A1, Fig. 1).

Um den Kraftfluss zu beeinflussen, wurde in der JP 2014-104732 A, Fig. 1-4, bereits vorgesehen, am verfahrbaren Formträger eine Materialausnehmung anzuordnen.

Aus der US 2018/0207848 A1 ist eine mit dem Formträger einstückige Lastaufnahme für den verfahrbaren Formträger bekannt.

Aus der US 2008/0175938 A1 ist eine Formschließeinheit mit einem verfahrbaren Formträger bekannt, der über eine längere Strecke auf einer Linearführung abgestützt ist.

Aus der DE 10 2016 119 583 B3 ist eine derartige Vorrichtung bekannt, bei der der verfahrbare Formträger über Lastaufnahmeschuhe auf Linearführungen abgestützt ist. Dort ist in den Lastaufnahmeschuhen eine Kapselung vorgesehen, mittels der ein bei der Bewegung des Formträgers frei werdendes Schmiermittel zumindest teilweise zurückhaltbar ist.

Ausgehend von diesem Stand der Technik liegt der Erfindung die Aufgabe zugrunde, die auf die Führung des verfahrbaren Formträgers einwirkenden Kräfte beim Betrieb der Spritzgießmaschine zu minimieren.

Dies wird mit einer Formschließeinheit für eine Spritzgießmaschine zur Verarbeitung von Kunststoffen und anderer plastifizierbarer Materialien gemäß den Merkmalen des Anspruches 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit ist auf einem Maschinenfuß zum standfesten Aufstellen der Formschließeinheit angeordnet. Vorgesehen ist wenigstens ein in Längsrichtung der Formschließeinheit verfahrbarer Formträger, der zusammen mit einem weiteren Formträger einen Formspannraum ausbildet. In dem Formspannraum können Teile wenigstens einer zyklisch öffen- und schließbaren Spritzgießform aufgenommen werden. Auf dem Maschinenfuß ist ferner eine Linearführung zur Führung des wenigstens einen verfahrbaren Formträgers bei Bewegung in Längsrichtung angeordnet. Zur Abstützung des verfahrbaren Formträgers auf der Linearführung bzw. auf dem Maschinenfuß ist eine Lastaufnahme vorgesehen. Die Lastaufnahme ist so ausgestaltet, dass sie oberhalb der wenigstens einen Linearführung an dem wenigstens einen verfahrbaren Formträger form- oder stoffschlüssig unter Ausbildung eines Anlenkbereichs angelenkt ist. Dieser Anlenkbereich ist so ausgebildet, dass seine Steifigkeit in Längsrichtung höher ist als in einer Richtung quer zur Längsrichtung. Grundsätzlich wird damit eine geometrische Anbindung im Übergangsbereich vom Formträger bis zur Lastaufnahme erzeugt, die dazu bestimmt und geeignet ist, die beim Betrieb der Spritzgießmaschine anfallenden Kräfte in vertikaler Richtung (z.B. Gewichtskraft) und in Maschinenlängsrichtung (z.B. dynamische Lasten infolge der Bewegung von Formträger und Spritzgießform) "steif" bzw. "stabil" aufzunehmen und dennoch in Querrichtung gegenüber Verformungen nachgiebig ist, die z.B. in Folge der Wärmeausdehnung der Spritzgießform beim Einspritzen des plastifizierten Materials und beim anschließenden Abkühlen bis zur Freisetzung des Spritzgießteils aus der Spritzgießform oder in Folge einer Verformung unter der Schließkraft auftreten.

Erfindungsgemäß ist die Lastaufnahme und/oder der Anlenkbereich ellipsenförmig ausgebildet, da die Ellipsenform die Einbringung der Kräfte bei gleichzeitiger Ausgestaltung einer steifen und einer weniger steifen Achse am besten gewährleistet. Die längere Achse ist dabei in Längsrichtung der Maschine vorgesehen, während die kleinere Achse der Ellipse quer zur Längsrichtung vorzugsweise horizontal die Nachgiebigkeit des Anlenkbereichs unterstützt. Diese bionische Ausgestaltung führt dazu, dass gezielt Kräfte, die in Längsrichtung der Maschine auftreten über eine steife Anbindung gut übertragen werden, während Kräfte in Querrichtung "weich" im System bleiben, ohne insbesondere die Längsführungen über Gebühr zu belasten.

Damit wird gezielt darauf eingewirkt, welche Kräfte über die Lastaufnahme abgetragen werden können, nämlich diejenigen in Längsrichtung sowie die Gewichtskräfte, während die quer zur Längsrichtung und damit in der Regel horizontal auftretenden Kräfte durch die "weiche" Ausgestaltung des Anlenkbereichs in dieser Richtung gar nicht oder zumindest deutlich weniger übertragen werden, sodass die Linearführung durch diese Kräfte nicht oder zumindest weniger beansprucht wird.

Gleichzeitig wird ein nachgiebiges Element geschaffen, nämlich der quer zur Längsrichtung, vorzugsweise in horizontaler Richtung, weiche Anlenkbereich, um die Querdehnung aufzunehmen und diese strukturoptimiert abzubauen. Durch entsprechende Beeinflussung der Steifigkeit je nach gewünschter Richtung des Krafteintrags kann dadurch der zwischen Gewichtskraft, dynamischen Kräften und Wärmeausdehnungskräften bestehende Zielkonflikt optimiert gelöst werden.

Vorzugsweise ist die Steifigkeit des Anlenkbereichs in vertikaler Richtung höher ist als in der Richtung quer zur Längsrichtung, sodass vorteilhaft die Gewichtskraft in der Regel vollständig über die Lastaufnahme auf die Linearführung übertragen wird und auf kürzestem Weg am Maschinenfuß ankommt, was gleichzeitig die möglichen Kippmomente verringert.

In einer bevorzugten Ausführungsform ist die Richtung quer zur Längsrichtung eine horizontale Richtung, die vorzugsweise etwa in der Ebene liegt, in der die Längsrichtung liegt, die etwa der Spritzachse der Spritzgießmaschine entspricht. Dadurch werden vorteilhaft die grundsätzlichen Voraussetzungen für eine zentrische Krafteinleitung als auch für die Übertragung bzw. auch verringerte Übertragung von Kräften geschaffen, da damit die Anordnung mit ihrer Mittelachse etwa im Bereich der neutralen Faser des Werkzeugs zu liegen kommt.

In einer bevorzugten Ausführungsform wird der verfahrbare Formträger über einen Schlitten auf der Linearführung abgestützt und gelagert, an dem die Lastaufnahme und damit der Anlenkbereich angebracht sind. Dies dient vorteilhafterweise einerseits dazu über einen längeren Bereich den verfahrbaren Formträger auf der Linearführung entlang der Längsrichtung abzustützen. Gleichzeitig werden die Kräfte über eine größere Fläche verteilt in den Maschinenfuß eingebracht. Je nach Aufbau kann der Schlitten ergänzend dazu beitragen, das gesamte System in sich auszusteifen. Da in der Regel mehrere Linearführungen, das heißt meist zwei Linearführungen auf beiden Seiten des Maschinenfußes angeordnet sind, ergibt sich durch einen entsprechend dimensionierten Schlitten ein dreidimensionale Rahmenwerk zur Eintragung der Kräfte in den Maschinenfuß.

Vorzugsweise ist der Schlitten mehrteilig ausgebildet und/oder weist mehrere Lastaufnahmen auf, so dass vorteilhafterweise je nach Bedarf die Teile des Schlittens relativ zueinander verstellt oder ausgesteift werden können, um z.B. die Steifigkeit in Längsrichtung zu erhöhen und/oder die Nachgiebigkeit quer zur Längsrichtung zu verringern. Ebenso kann eine Höhenverstellung auch zwischen den Teilen des Schlittens vorgesehen werden.

Zur besseren Lastübertragung ist es ebenso von Vorteil, wenn vorzugsweise der verfahrbare Formträger an mehreren in Längsrichtung der Formschließeinheit voneinander beabstandeten Abstützelementen auf der Linearführung abgestützt ist.

Grundsätzlich kann der Anlenkbereich auf verschiedene Art und Weise ausgebildet sein. Vorzugsweise ist er durch ein Stoffgelenk gebildet, das heißt die Lastaufnahme und der verfahrbare Formträger sind stoffschlüssig oder einstoffig miteinander verbunden, indem sie z.B. aus einem Guss bzw. im Ausführungsbeispiel aus einem Gussstück hergestellt sind. Da das Stoffgelenk aber im Anlenkbereich unterschiedliche Steifigkeiten in Längsrichtung und quer zur Längsrichtung der Formschließeinheit gestattet, kann durch eine entsprechende Dimensionierung vorteilhaft die gewünschte Eintragung dynamischer Lasten und von Gewichtskräften bei gleichzeitiger Nachgiebigkeit in Querrichtung gewährleistet werden.

Vorzugsweise ist an der Lastaufnahme und/oder am Anlenkbereich wenigstens ein Lastmesselement vorgesehen, das vorzugsweise als Kraft- oder Dehnungsmesselement ausgebildet ist und vorzugsweise in Längsrichtung und Querrichtung angeordnet ist. Dadurch lassen sich vorteilhafterweise die Kräfte in diesem Bereich sehr gut erfassen, so dass detektiert werden kann, ob eine etwaige Überlast an den Verformungselemente wie der Lastaufnahme und/oder an den Führungselementen vorliegt.

Bevorzugterweise ist dieses Lastmesselement im Bereich des Stoffgelenks und der damit verbundenen Lastaufnahme angeordnet, da durch die einstückige Ausgestaltung die Kräfte dort vorteilhaft eindeutig an diesen Ausgleichsfestkörpergelenken optimal, insbesondere mittels Dehnmessstreifen erfasst werden können.

In einer alternativen bevorzugten Ausführungsform ist am verfahrbaren Formträger eine Materialausnehmung zur Verringerung der Steifigkeit des Anlenkbereichs quer zur Längsrichtung, also in Querrichtung vorgesehen. Dazu ist der verfahrbare Formträger an den voneinander beabstandeten Abstützelementen auf den auf beiden Seiten des Maschinenfußes angeordneten Linearführungen abgestützt, sodass die Materialausnehmung zwischen diesen Linearführungen am verfahrbaren Formträger vorgesehen ist. Durch die Materialausnehmung wird vorteilhaft die Steifigkeit gezielt dort verringert, wo keine Kräfte oder möglichst wenig Kräfte übertragen werden sollen.

Grundsätzlich kann der Anlenkbereich auch auf andere Art und Weise ausgebildet werden, indem entweder ein Formschluss erzeugt oder eine mechanische Verbindung zwischen Lastaufnahme und verfahrbarem Formträger geschaffen wird, die so ausgestaltet ist, dass vorteilhaft unterschiedliche Steifigkeiten konstruktiv gewährleistet sind.

Vorzugsweise befindet sich der Anlenkbereich in einer Höhe von 20 bis 70%, vorzugsweise 40 bis 60% der Höhe des verfahrbaren Formträgers. Erfolgt die Anlenkung etwa in der Mitte des verfahrbaren Formträgers, entspricht dies bei den thermischen Belastungen infolge des zyklischen Aufheizens und Abkühlens der Spritzgießform etwa der neutralen Faser, an der in vertikaler Richtung bei zentraler Wärmeeinleitung die geringste Verformung entsteht. Damit ist dieser Bereich vorteilhaft zur Verbindung zwischen Formträger und Lastaufnahme am besten geeignet. Eine Anlenkung in diesem Bereich, der etwa auch der Höhe des Schwerpunkts der Spritzgießform entspricht, kann gleichzeitig dazu beitragen, die Kippgefahr beim Bewegen des verfahrbaren Formträgers zu verringern.

In einem bevorzugten Ausführungsbeispiel kann ergänzend auch der weitere Formträger, der in der Regel ein relativ zum Maschinenfuß stationärer Formträger sein kann, ebenfalls einen derartigen Anlenkbereich aufweisen, um vorteilhafterweise auch dort im Wesentlichen die Gewichtskräfte zuverlässig in den Maschinenfuß einzuleiten, gleichzeitig aber sich aus der Bewegung oder Temperaturausdehnung ergebende Kräfte nachgiebig im System zu halten.

Es hat sich als vorteilhaft herausgestellt, wenn ergänzend eine Höhenverstellung zur Verstellung der Höhe des verfahrbaren Formträgers relativ zur Linearführung vorgesehen ist. Diese Höhenverstellung kann an unterschiedlichen Stellen angreifen und dient vor allem dazu, den verfahrbaren Formträger in seiner Höhe optimal einzustellen, sodass er auf den Linearführungen zuverlässig geführt ist und gleichzeitig die fertigungsbedingten Toleranzen der beteiligten Komponenten ausgeglichen werden können. Insbesondere kann dabei darauf geachtet werden, dass keine Berührung mit den Holmen oder Säulen stattfindet, die die Abstützung des Schließmechanismus mit dem stationären Formträger verbinden und über die die Schließkräfte übertragen werden, so dass die Holme oder Säulen nur noch als Zuganker eingesetzt werden.

Eine derartige Höhenverstellung kann an verschiedenen Punkten der Formschließeinheit angreifen. Als bevorzugte Punkte haben sich der Anlenkbereich selbst, aber auch eine Anordnung zwischen Lastaufnahme und Schlitten und/oder zwischen Schlitten und Linearführung herausgestellt.

In einem weiteren bevorzugten Ausführungsbeispiel kann auch der Schlitten selbst mehrteilig sein, wobei die Höhenverstellung zwischen den Teilen des Schlittens vorgesehen ist.

Um vorteilhaft eine einfache Bedienung der Höhenverstellung zu ermöglichen, kann in einem bevorzugten Ausführungsbeispiel die Höhenverstellung einen voreinstellbaren Höhen-Einstellbereich mit einem manuell betätigbaren Einstellhebel aufweisen. Die Bedienung ist dann vergleichbar mit einer Leuchtweitenregulierung an einem Fahrzeug. Durch eine Verstellung des Einstellhebels wird die Höhe nach oben oder unten durch einen Handgriff schnell und zuverlässig verändert. Gleichzeitig kann damit auf sich ggf. auch während des Betriebs ändernde und/oder wechselnde Lastverhältnisse aktiv Einfluss genommen werden.

Weitere Vorteile ergeben sich aus der folgenden Beschreibung bevorzugter Ausführungsbeispiele.

Im Folgenden wird die Erfindung anhand mehrerer in den beigefügten Figuren dargestellten Ausführungsbeispielen näher erläutert. Es zeigen:
- Fig. 1: eine dreidimensionale Ansicht einer Formschließeinheit,
- Fig. 1a, 1b: einen vergrößerten Ausschnitt aus Fig.1 im Bereich des verfahrbaren Formträgers,
- Fig. 2: eine Formschließeinheit in einer dreidimensionalen Ansicht gemäß einem weiteren Ausführungsbeispiel,
- Fig. 2a, 2b, 2c: vergrößerte Ansichten von Ausführungsbeispielen des verfahrbaren Formträgers gemäß Fig. 2,
- Fig. 2d, 2e: vergrößerte Ansichten gemäß Fig. 2 einer Höhenverstellung mit Einstellbereich,
- Fig. 3: eine Formschließeinheit in einer dreidimensionalen Ansicht gemäß einem weiteren Ausführungsbeispiel,
- Fig. 3a, 3b, 3c: vergrößerte Ansichten von Ausführungsbeispielen des verfahrbaren Formträgers gemäß Fig. 3,
- Fig. 3d: eine vergrößerte Ansicht der Höhenverstellung am Schlitten unten,
- Fig. 4: eine Formschließeinheit in einer dreidimensionalen Ansicht gemäß einem weiteren Ausführungsbeispiel,
- Fig. 4a, 4b: eine vergrößerte Ansicht des verfahrbaren Formträgers gemäß Fig. 4,
- Fig. 4c: eine vergrößerte Ansicht des verfahrbaren Formträgers gemäß Fig. 4,
- Fig. 5: eine Seitenansicht der Formschließeinheit gemäß Fig. 1 - 4,
- Fig. 5a: einen Schnitt durch den Formträger nach Linie F-F von Fig. 5,
- Fig. 6: eine Formschließeinheit in einer dreidimensionalen Ansicht gemäß einem weiteren Ausführungsbeispiel,
- Fig. 7: eine Ansicht auf den auf dem Maschinenfuß abgestützten verfahrbaren Formträger gemäß Fig. 6.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen in mehreren Ausführungsbeispielen eine Formschließeinheit F für eine Spritzgießmaschine zur Verarbeitung von Kunststoffen und anderer plastifizierbarer Massen wie pulvrige oder keramische Massen. In den Figuren ist lediglich die Formschließeinheit der Spritzgießmaschine dargestellt, die auf einen Maschinenfuß 14 angeordnet ist und üblicherweise mit einer zeichnerisch nicht dargestellten Spritzgießeinheit zusammenarbeitet. In der Spritzgießeinheit werden Kunststoffe oder plastifizierbare Massen aufbereitet, homogenisiert und plastifiziert, damit sie dann in einen Formhohlraum einer im Formspannraum C der Formschließeinheit F aufgenommenen Spritzgießform M eingespritzt werden können. Ein derartiger Aufbau ist für Spritzgießmaschinen grundsätzlich bekannt, so dass hierauf nicht näher eingegangen werden muss.

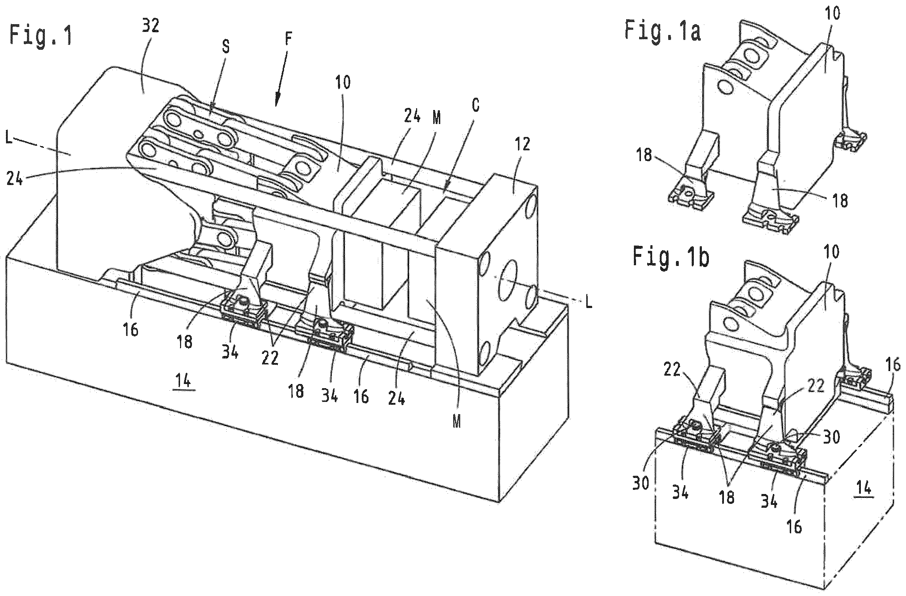

Auf dem Maschinenfuß ist gemäß Fig. 1 die Formschließeinheit F standfest aufgestellt. Die Formschließeinheit F umfasst in der Regel zumindest einen in Längsrichtung L-L der Formschließeinheit verfahrbaren Formträger 10 sowie einen weiteren Formträger 12, der vorzugsweise ein mit dem Maschinenfuß fest verbundener stationärer Formträger ist. Je nach Größe der Maschine kann wie im vorliegenden Fall auch, der verfahrbare Formträger 10 auch als Rahmenträger ausgebildet sein und eine Tragstruktur hinter der eigentlichen Werkzeugaufspannplatte aufweisen.

Grundsätzlich kann es sich bei der Spritzgießmaschine sowohl um eine 2-Platten-Maschine als auch um eine 3-Platten-Maschine handeln, bei der wie in Fig. 1 eine zusätzliche Abstützung 32 am linken Ende der Formschließeinheit für einen von einem Schließantrieb betätigbaren Schließmechanismus S vorgesehen ist. Der motorische Antrieb des Schließmechanismus ist unter der Abdeckung des Abstützelementes 32 verborgen. Erkennbar ist jedoch im vorliegenden Ausführungsbeispiel, dass es sich bei dem Schließmechanismus um einen Kniehebelmechanismus handelt. Grundsätzlich können aber auch andere Schließmechanismen, wie z.B. hydraulische, pneumatische, elektromechanische oder auch elektrische Schließmechanismen und zugehörige Antriebe eingesetzt werden.

Bei der Herstellung von Spritzgießteilen wird zu Beginn des Spritzzyklus mittels des Schließmechanismus S der verfahrbare Formträger 10 aus einer geöffneten Stellung der Spritzgießform M in eine geschlossene Stellung der Spritzgießform M überführt. Beim so hergestellten Formschluss der Spritzgießform wird von der zeichnerisch nicht dargestellten Spritzgießeinheit plastifiziertes Material in den Formhohlraum der Spritzgießform M eingespritzt. Zu diesem Zeitpunkt ist die Spritzgießform in der Regel aufgeheizt, um beim Einspritzen des plastifizierten Materials die Fließfähigkeit des Materials zu unterstützen. Nach dem Einspritzen wir das plastifizierte Material unter Nachdruck dort abgekühlt, bis es so weit erstarrt ist, dass es beim Öffnen der Spritzgießform M aus dem Formhohlraum als Spritzgießteil ausgeworfen oder entnommen werden kann.

Die Öffnungs- und Schließbewegung erfolgt mittels des Schließmechanismus S, wobei der verfahrbare Formträger 10 dabei entlang wenigstens einer auf dem Maschinenfuß 14 in Längsrichtung L-L der Formschließeinheit F angeordneten Linearführung 16 geführt ist. Im Ausführungsbeispiel sind zwei Linearführungen 16, jeweils eine auf jeder Seite des Maschinenfußes 14, zur Führung des wenigstens einen verfahrbaren Formträgers 10 vorgesehen. Grundsätzlich können auch mehr als zwei oder auch nur eine Linearführung 16 vorgesehen sein.

Die Teile der Spritzgießform M werden während eines Spritzzyklus zyklisch geöffnet und geschlossen, um dadurch zyklisch Spritzgießteile zu fertigen. Die beim Öffnen und Schließen der Spritzgießform M auftretenden Kräfte sowie die Schließkraft werden über die Holme 24 zwischen dem weiteren Formträger 12 und der Abstützung 32, bei einer 2-Platten-Maschine zwischen dem verfahrbaren Formträger 10 und dem Formträger 12 übertragen. Als Kraftübertragungselemente müssen jedoch keine Holme 24 oder Säulen verwendet werden, es können auch in bekannter Weise holmlose Kraftübertragungselemente vorgesehen sein, die einen freien Zugang zum Formspannraum C ermöglichen. Auch die erfindungsgemäße Formschließeinheit F kann "holmlos" aufgebaut sein.

Um die bei diesem Fertigungsprozess auftretenden Kräfte aufzunehmen und in den Maschinenfuß 14 zu übertragen, ist eine Lastaufnahme 18 vorgesehen, die den wenigstens einen verfahrbaren Formträger 10 auf dem Maschinenfuß 14 und/oder der wenigstens einen Linearführung 16 abstützt. Im Ausführungsbeispiel überträgt die Lastaufnahme 18 die Kräfte über einen Schlitten 26 auf wenigstens ein, im Ausführungsbeispiel mehrere Abstützelemente 34, die ihrerseits auf der Linearführung 16 gleiten und damit die Kräfte über die Linearführung in den Maschinenfuß 14 übertragen.

Bei diesen Kräften handelt es sich um verschiedene beim Spritzgießprozess auftretende Kräfte. Zum einen sind die Gewichtskräfte des verfahrbaren Formträgers 10 zuzüglich der Gewichtskraft der Spritzgießform M vorhanden. Bei einer größeren Maschine kann es sich hier schnell um eine Gewichtskraft von 10 bis 100 kN handeln. Des Weiteren ergeben sich im Spritzgießprozess auch dynamische Kräfte in Folge der Bewegung des verfahrbaren Formträgers 10 in Längsrichtung L-L aus der Öffnungs- in die Schließposition der Spritzgießform M und zurück. Diese dynamischen Kräfte müssen zuverlässig in den Maschinenfuß eingeleitet werden, schon allein um einem eventuellen Kippen von Formträger mit Werkzeug entgegenzuwirken.

Weitere Kräfte entstehen aber auch dadurch, dass die Spritzgießform M auf eine bestimmte Temperatur vor dem Einspritzen erwärmt und zum Abkühlen der eingespritzten Materialien wieder gekühlt werden muss. In Folge der Wärmeausdehnung der Materialien können hier Kräfte entstehen, die sich vor allem in einer Richtung quer zur Längsrichtung L-L der Formschließeinheit F nachteilig auswirken können. In dieser Querrichtung wirken diese Kräfte insbesondere auf die Linearführungen ein, die dadurch einer zusätzlichen Belastung und damit Verschleiß ausgesetzt sind.

Um diese Kräfte in den Maschinenfuß einzuleiten, möglichst ohne die Linearführung über Gebühr zu belasten, da dies für die Präzision der Formschließeinheit und damit die Qualität der zu fertigenden Spritzgießteile nachteilig ist und zudem die Lebensdauer der Komponenten beeinträchtigt, sind diese Kräfte gesondert zu betrachten. Die Gewichtskräfte sollten möglichst unmittelbar in den Maschinenfuß übertragen werden, was ebenso für die dynamischen Kräfte gilt. Die Kräfte infolge der Wärmeausdehnung hingegen können über ein nachgiebiges Element in der Formschließeinheit in Querrichtung, also in einer Richtung quer zur Längsrichtung L-L der Spritzgießmaschine zu Bewegungen führen. Der damit auf den ersten Blick entstehende Zielkonflikt einer Ableitung bestimmter Kräfte, während andere Kräfte in dem System verbleiben, wird dadurch aufgelöst, dass die Lastaufnahme 18 oberhalb der wenigstens einen Linearführung 16 einen Anlenkbereich 20 für den wenigstens einen verfahrbaren Formträger 10 aufweist. Dieser Anlenkbereich 20 ist form- oder stoffschlüssig mit dem verfahrbaren Formträger 10 verbunden und seine Steifigkeit ist in Längsrichtung L-L höher als in einer Richtung quer zur Längsrichtung L-L.

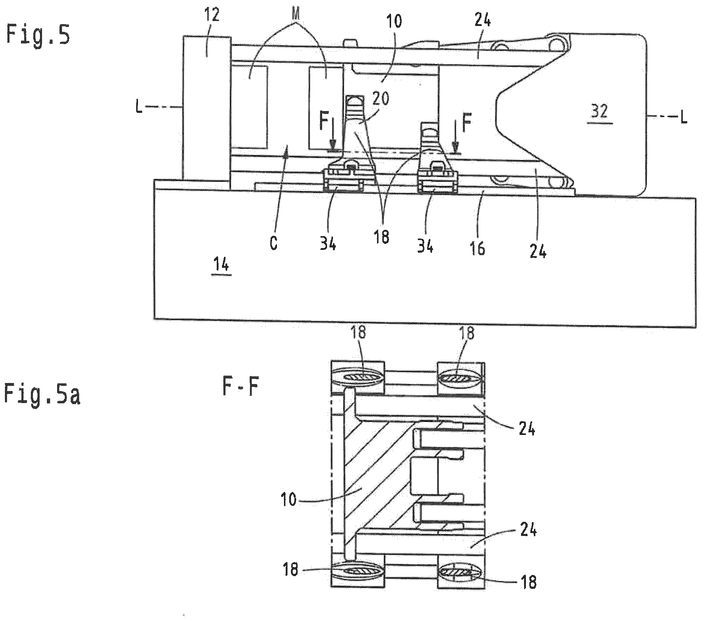

Fig. 5 zeigt schematisch eine Seitenansicht einer Formschließeinheit F, wie sie grundsätzlich bei sämtlichen Ausführungsbeispielen zu erkennen ist. Fig. 5a zeigt einen Schnitt nach Linie F-F von Fig. 5 durch den verfahrbaren Formträger 10. Dabei ist der Querschnitt der Lastaufnahme 18 bzw. des Anlenkbereichs zu erkennen. Die Lastaufnahme 18 und/oder der Anlenkbereich 20 sind im Querschnitt ellipsenförmig, wobei sich die kleinere Achse der Ellipse in einer Richtung quer zur Längsrichtung L-L der Formschließeinheit F und zwar vorzugsweise in horizontaler Richtung erstreckt. Damit ist die Lastaufnahme 18 bzw. der Anlenkbereich 20 in dieser Richtung nachgiebiger als in Richtung der langen Achse der Ellipse. Dies ist gleichbedeutend damit, dass die Steifigkeit des Anlenkbereichs 20 bzw. der Lastaufnahme 18 in Querrichtung geringer ist als in Längsrichtung L-L. Durch diese bionische Ausgestaltung können die in Querrichtung auftretenden Verformungen elastisch aufgenommen werden, während gleichwohl in den anderen Raumrichtungen, d.h. in Längsrichtung L-L und vertikal eine ausreichende Steifigkeit vorhanden ist.

In der Regel hat die Formschließeinheit F eine Stellung wie in Fig. 1 dargestellt, d.h. sie erstreckt sich mit ihrer Längsrichtung L-L horizontal. Die Gewichtskräfte greifen damit vertikal an und hiergegen bzw. gegen das dadurch hervorgerufene Einfedern muss die Spritzgießmaschine entsprechend steif ausgebildet sein. Ebenso ist eine Steifigkeit bzw. Stabilität auch für die dynamischen Belastungen erforderlich, da diese schnell und zuverlässig in den Maschinenfuß eingeleitet werden müssen. In der Querrichtung, also in einer Richtung quer zur Längsrichtung L-L hingegen ist die Formschließeinheit erfindungsgemäß für Kräfte aus der Verformung unter Schließkraft und vor allem gegen thermisches Wachstum also gegen die thermischen Ausdehnungskräfte nachgiebig.

Daher ist der Anlenkbereich sowohl in Längsrichtung als auch in vertikaler Richtung steifer ausgebildet als in der Richtung quer zur Längsrichtung L-L.

Im ersten Ausführungsbeispiel der Fig. 1 ist die Lastaufnahme 18 und damit auch der zugehörige Anlenkbereich fest am verfahrbaren Formträger 10 angegossen, d.h. es besteht eine stoffschlüssige Verbindung. Die Ankopplung erfolgt über ein Stoffgelenk 22, das jedoch konstruktiv so ausgestaltet ist, dass seine Steifigkeit in Längsrichtung L-L höher ist, als in einer Richtung quer zur Längsrichtung L-L. Das Stoffgelenk 22 ist insbesondere in den Figuren 1a und 1b zu erkennen, in denen der Formträger 10 für sich bzw. auf dem Maschinenfuß 14 dargestellt ist.

Grundsätzlich ist in diesem Ausführungsbeispiel wie auch in den folgenden Ausführungsbeispielen eine Höhenverstellung 30 vorgesehen, die bei der einstückigen und damit stoffschlüssigen Ausgestaltung der Verbindung zwischen Lastaufnahme 18 und Formträger 22 nur unten zwischen Lastaufnahme 18 und den Abstützelementen 34 angeordnet sein kann.

Eine derartige Höhenverstellung ist erforderlich, um die fertigungsbedingten Toleranzen der beteiligten Komponenten auszugleichen. Als Höhenverstellung wird eine Bolzen-/Gewindestiftlösung verwendet, wie sie im Stand der Technik allgemein bekannt ist.

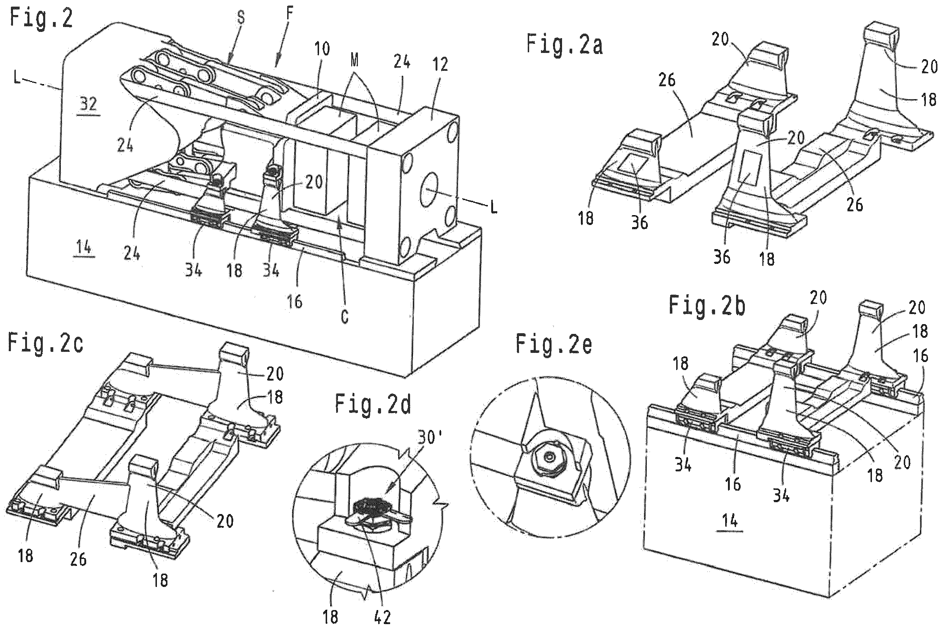

Fig. 2 zeigt eine Formschließeinheit gemäß einem weiteren Ausführungsbeispiel, bei dem ein Schlitten 26 vorgesehen ist, auf dem der verfahrbare Formträger 10 gelagert ist. Über den Schlitten wird der verfahrbare Formträger auf der Linearführung 16 abgestützt. Gemäß Fig. 2a sind dabei die Lastaufnahmen 18 Bestandteil des unteren Schlittens 26, wobei der Schlitten gemäß Fig. 2a mehrere Teile aufweisen kann. Diese Teile können aber auch bei einer Ausgestaltung gemäß Fig. 2c miteinander zu einem Schlitten verbunden sein. Eine einteilige Ausgestaltung führt zu einer höheren Steifigkeit, während bei einer mehrteiligen Ausgestaltung ein geringerer thermischer Einfluss auf die Linearführung 16 erfolgt.

Im Ausführungsbeispiel der Fig. 2 ist die Höhenverstellung 30 als Bolzen-/Gewindestiftlösung oben angedeutet. Dies wird auch in den vergrößerten Darstellungen gemäß Fig. 2d bzw. Fig. 2e deutlich. In Fig. 2e kann dabei ein Einstellbereich durch Verstellen des Bolzens vorgesehen sein. Gemäß Fig. 2d kann die dortige Höhenverstellung 30' hingegen eine Einstellbegrenzung aufweisen, da dort ein voreinstellbarer Höhen-Einstellbereich mit einem manuell betätigbaren Einstellhebel 42 vorgesehen ist, der jedoch nur in einem begrenzten Bereich bewegbar ist. Eine derartige Ausgestaltung erleichtert es dem Bediener, eine Höhenverstellung schnell und einfach umzusetzen, indem er den Einstellhebel 42 nach links oder rechts bewegt. Dies ist vergleichbar mit einer Leuchtweitenregulierung in einem Fahrzeug, bei der ebenfalls durch Drehen die Höhe des Lichtstrahls eingestellt wird.

Durch die Verwendung mehrerer Lastaufnahmen 18, wie insbesondere bei einer Ausgestaltung mittels eines Schlittens 26, können die Kräfte über eine längere Fläche entlang der Linearführung 16 verteilt in den Maschinenfuß 14 abgeleitet werden. Dazu sind in Längsrichtung L-L der Formschließeinheit F die Abstützelemente 34 voneinander beabstandet.

Fig. 2a zeigt beispielhaft auch eine Anordnung wenigstens eines Lastmesselements 36, im Ausführungsbeispiel zwei Lastmesselementen 36. Die Lastmesselemente 36 sind hier an der Lastaufnahme 18 angebracht, können aber ergänzend oder alternativ auch am Anlenkbereich 20 angebracht sein. Das Lastmesselement 36 ist vorzugsweise als Kraft- oder Dehnungsmesselement ausgebildet und vorzugsweise in Längsrichtung und Querrichtung angeordnet. Dadurch lassen sich die Kräfte in diesem Bereich sehr gut erfassen, so dass detektiert werden kann, ob eine etwaige Überlast an den Verformungselemente wie der Lastaufnahme 18 und/oder an der Linearführung 16 vorliegt.

Bevorzugterweise ist dieses Lastmesselement 36 jedoch im Bereich eines Stoffgelenks 20 und der damit verbundenen Lastaufnahme 18 angeordnet, wie sie in Fig. 1 gezeigt ist. Durch die einstückige Ausgestaltung können die Kräfte dort optimal an diesen Ausgleichsfestkörpergelenken, insbesondere mittels Dehnmessstreifen erfasst werden.

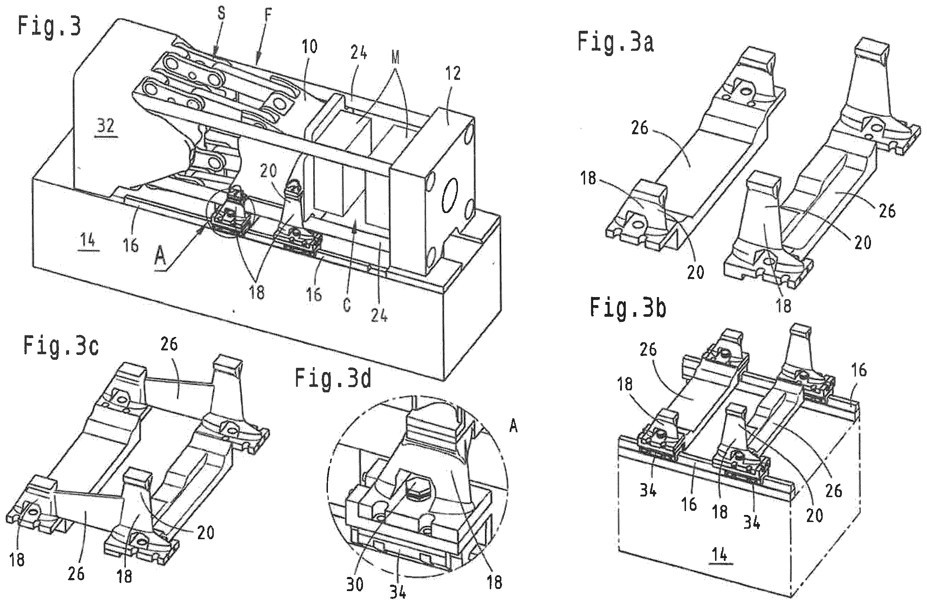

Im Ausführungsbeispiel der Fig. 3 ist eine weitere Ausführungsform der Formschließeinheit F gezeigt, bei der die Lastaufnahme 18 ein gesondertes Teil ist, das am Schlitten 26 befestigt wird. Der Schlitten 26 kann dabei wie im zweiten Ausführungsbeispiel der Fig. 2 aus mehreren Teilen gemäß Fig. 3a oder aus zwei miteinander verbundenen Teilen gemäß Fig. 3c bestehen, die Höhenverstellung 30 ist gemäß Fig. 3d in diesem Fall zwischen dem Schlitten 26 und der Linearführung 16 angeordnet, d.h. sie befindet sich im Vergleich zu den anderen Ausführungsbeispielen unten. Die Lastaufnahme 18 ist ferner oben ohne Verstellmöglichkeit mit dem verfahrbaren Formträger 10 verschraubt. Auch hier ist der Anlenkbereich 20 in Längsrichtung L-L steifer ausgebildet als in einer Richtung quer zur Längsrichtung.

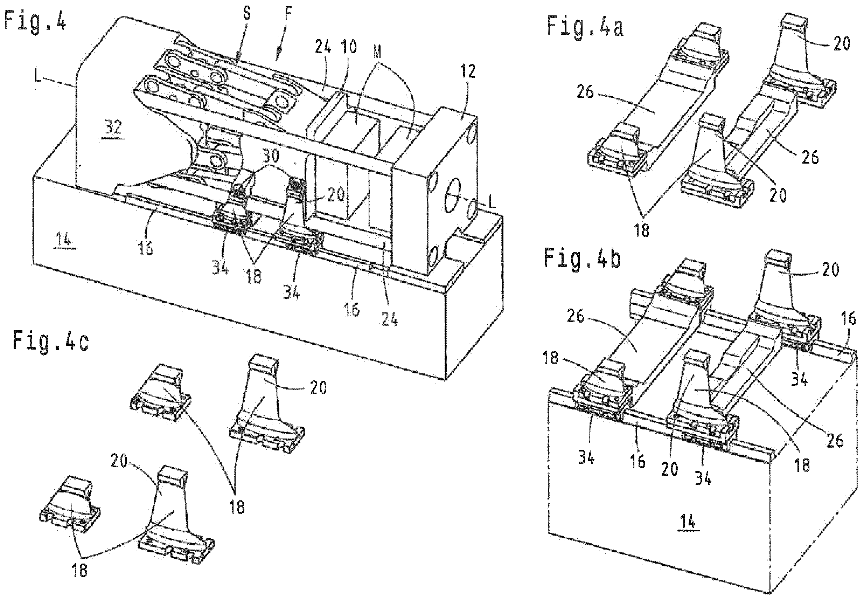

In Fig. 4 wird ein weiteres Ausführungsbeispiel gezeigt, bei dem die Lastaufnahme 18 ein eigenständiges Bauteil ist, das gemäß Fig. 4a, Fig. 4b sowohl am Schlitten 26 als auch am verfahrbaren Formträger 10 angeschraubt ist. Eine Höhenverstellung 30 ist gemäß Fig. 4 an der Lastaufnahme 18 oberhalb des Anlenkbereichs 20 vorgesehen, sie könnte jedoch ebenso unten oder zwischen Schlitten 26 und Linearführung 16 angeordnet werden. Je mehr Teile für Lastaufnahme 18 und Schlitten 26 vorgesehen sind, desto geringer ist der thermische Einfluss auf die Linearführung 16, je weniger Teile vorgesehen werden, desto steifer ist der Schlitten und damit die Kraftübertragung.

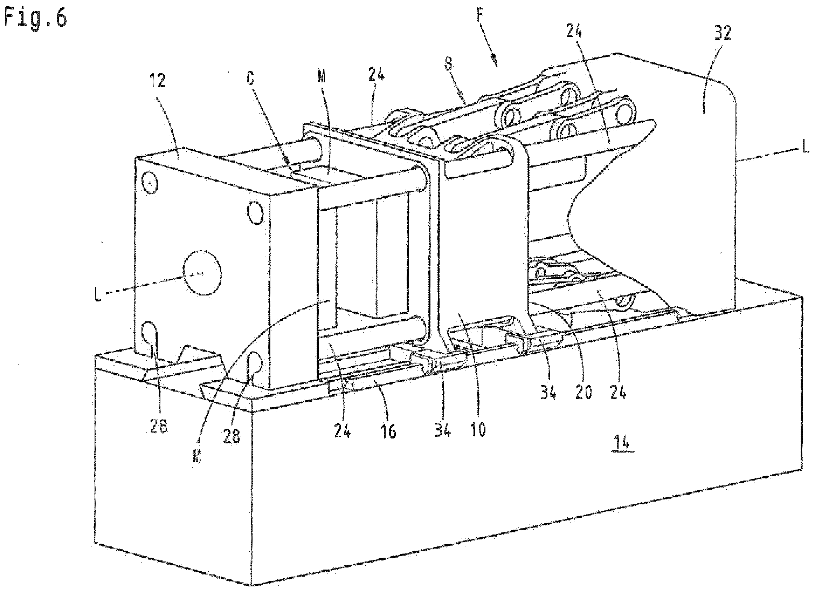

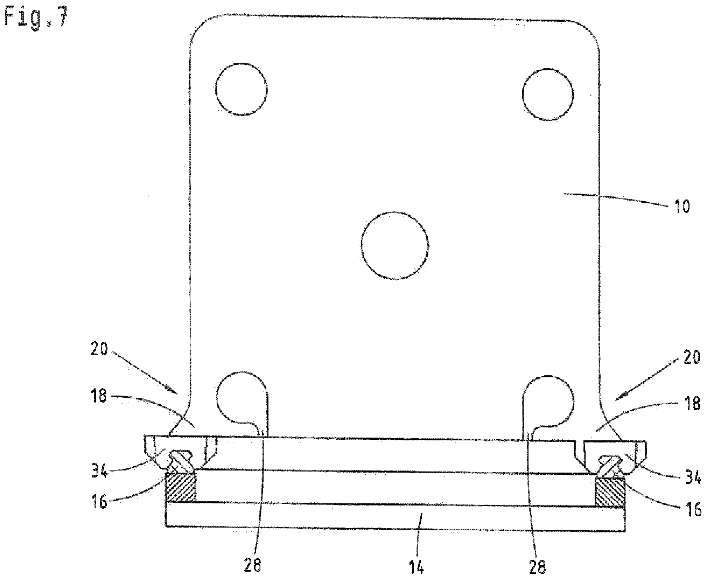

Die Steifigkeit in Längsrichtung L-L kann ergänzend oder alternativ auch im Rahmen des fünften Ausführungsbeispiels der Figuren 6, 7 dadurch umgesetzt werden, dass am verfahrbaren Formträger 10 gemäß Fig. 7 quer zur Längsrichtung L-L und vorzugsweise in horizontaler Richtung wenigstens eine Materialausnehmung 28 zur Verringerung der Steifigkeit des Anlenkbereichs 20 vorgesehen ist. Deutlich ist zu erkennen, dass dadurch die Lastaufnahme 18 und/oder der Anlenkbereich 20 im unteren Bereich "weicher" werden, so dass Querverformungen, die im verfahrbaren Formträger 10 auftreten in deutlich geringerem Maße bis in den Bereich der Linearführung 16 übertragen werden.

Während im ersten Ausführungsbeispiel der Fig. 1 eine stoffschlüssige Verbindung zwischen Lastaufnahme 18 und verfahrbarem Formträger 10 vorgesehen ist, ist diese Verbindung in den weiteren Ausführungsbeispielen der Fig. 2 bis 4 formschlüssig, indem die Teile mechanisch miteinander verbunden werden.

Den Ausführungsbeispielen ist gemeinsam, dass der Anlenkbereich 20 sich in einer Höhe von 20 bis 70 %, vorzugsweise 40 bis 60 % der Höhe des verfahrbaren Formträgers 10 befindet und damit etwa in Höhe der bei Wärmeausdehnung neutralen Faser. Damit erfolgt eine Anlenkung des verfahrbaren Formträgers 10 etwa in der Mitte, was zur Einleitung der Kräfte eine konstruktiv gute Position ist. Der mittige Anlenkpunkt ist für die thermische Ausdehnung bei zentrischer Beheizung durch die Spritzgießform M eine neutrale Faser für die thermische Ausdehnung nach unten und oben. Damit ergibt sich in dieser Ebene im Wesentlichen nur eine Querausdehnung, die über die nachgiebige Lastaufnahme 18 mit Anlenkbereich 20 aufgenommen werden kann. Gleichzeitig hat eine etwa mittige Anlenkung auch den Vorteil einer Anlenkung etwa in Höhe des Schwerpunktes von verfahrbarem Formträger 10 und Spritzgießform M, so dass dadurch auch Kippmomenten entgegengewirkt wird.

Grundsätzlich kann auch der weitere Formträger 12 (z.B. gemäß Fig. 6) analog zum verfahrbaren Formträger 10 ausgebildet sein, d.h. auch dort kann eine entsprechende Nachgiebigkeit in Querrichtung konstruktiv vorgesehen werden. Dies gilt vor allem dann, wenn er nicht als stationärer Formträger ausgebildet ist, aber selbst als stationärer Formträger kann eine derartige Anlenkung über einen Anlenkbereich 20 mit unterschiedlichen Steifigkeiten je nach Ausrichtung des Anlenkbereichs von Vorteil sein, um die beim Spritzgießprozess auftretenden Kräfte zuverlässig und gezielt abzuleiten.

Alternativ können für die gezeigten Höhenverstellungen auch Keile verwendet werden, deren Schrägflächen aneinander auf- oder abgleiten, um dadurch die Höhe des verfahrbaren Formträgers relativ zur Linearführung zu verstellen.

Grundsätzlich wird erfindungsgemäß eine Formschließeinheit geschaffen, mit der die Linearführung dafür vorgesehen werden kann, wofür sie bestimmt ist, nämlich den verfahrbaren Formträger 10 zu führen, wobei sie Gewichtskräfte und dynamische Lasten in den Maschinenfuß 14 ableiten kann. Im Übrigen ist sie von den beim Betrieb auftretenden Kräften weitgehend befreit.

### Bezugszeichenliste

- 10: verfahrbarer Formträger
- 12: weiterer Formträger
- 14: Maschinenfuß
- 16: Linearführung
- 18: Lastaufnahme
- 20: Anlenkbereich
- 22: Stoffgelenk
- 24: Holm
- 26: Schlitten
- 28: Materialausnehmung
- 30, 30': Höhenverstellung
- 32: Abstützung
- 34: Abstützelement
- 36: Lastmesselement (Fig. 2a)
- 42: Einstellhebel
- C: Formspannraum
- F: Formschließeinheit
- L-L: Längsrichtung
- M: Spritzgießform
- S: Schließmechanismus

## Patentansprüche

1. Formschließeinheit (F) für eine Spritzgießmaschine zur Verarbeitung von Kunststoffen und anderer plastifizierbarer Massen mit
- einem Maschinenfuß (14) zum standfesten Aufstellen der Formschließeinheit (F),
- wenigstens einem in einer Längsrichtung (L-L) der Formschließeinheit (F) verfahrbaren Formträger (10), der zwischen sich und einem weiteren Formträger (12) einen Formspannraum (C) ausbildet, in dem Teile wenigstens einer zyklisch öffen- und schließbaren Spritzgießform (M) aufnehmbar sind,
- wenigstens einer auf dem Maschinenfuß (14) in der Längsrichtung (L-L) der Formschließeinheit angeordneten Linearführung (16) zur Führung des wenigstens einen verfahrbaren Formträgers (10) bei Bewegung in Längsrichtung (L-L),
- wenigstens einer den wenigstens einen verfahrbaren Formträger (10) auf dem Maschinenfuß (14) und/oder auf der wenigstens einen Linearführung (16) abstützenden Lastaufnahme (18), welche Lastaufnahme (18) oberhalb der wenigstens einen Linearführung (16) einen Anlenkbereich (20) für den wenigstens einen verfahrbaren Formträger (10) aufweist, der form- oder stoffschlüssig mit dem verfahrbaren Formträger verbunden ist und dessen Steifigkeit in Längsrichtung (L-L) höher ist als in einer Richtung quer zur Längsrichtung (L-L),
**dadurch gekennzeichnet, dass** die Lastaufnahme (18) und/oder der Anlenkbereich (20) im Querschnitt ellipsenförmig ist, wobei sich die kleinere Achse der Ellipse in einer Richtung quer zur Längsrichtung (L-L) der Formschließeinheit (F) erstreckt.

2. Formschließeinheit nach Anspruch 1, **dadurch gekennzeichnet, dass** die Steifigkeit des Anlenkbereichs (20) in vertikaler Richtung (L-L) höher ist als in der Richtung quer zur Längsrichtung (L-L).

3. Formschließeinheit nach Anspruch 1 oder 2, **dadurch gekennzeichnet, dass** die Richtung quer zur Längsrichtung (L-L) eine horizontale Richtung ist, die vorzugsweise etwa in der Ebene liegt, in der die Längsrichtung (L-L) liegt.

4. Formschließeinheit nach einem der vorhergehenden Ansprüche, **dadurch gekennzeichnet, dass** der verfahrbare Formträger (10) über einen Schlitten (26) auf der Linearführung (16) abgestützt und gelagert ist, der die Lastaufnahme bildet oder an dem die Lastaufnahme (18) angebracht ist.

5. Formschließeinheit nach Anspruch 4, **dadurch gekennzeichnet, dass** der Schlitten (26) mehrteilig ist und/oder mehrere Lastaufnahmen (18) aufweist.

6. Formschließeinheit nach einem der vorhergehenden Ansprüche, **dadurch gekennzeichnet, dass** der verfahrbare Formträger (10) an mehreren in Längsrichtung (L-L) der Formschließeinheit (F) voneinander beabstandeten Abstützelementen (34) auf der Linearführung (16) abgestützt ist.

7. Formschließeinheit nach einem der vorhergehenden Ansprüche, **dadurch gekennzeichnet, dass** der Anlenkbereich (20) durch ein Stoffgelenk (22) gebildet ist.

8. Formschließeinheit nach einem der vorhergehenden Ansprüche, **dadurch gekennzeichnet, dass** wenigstens ein Lastmesselement (36) an der Lastaufnahme (18) und/oder am Anlenkbereich (20) vorgesehen ist.

9. Formschließeinheit nach Anspruch 7 und 8, **dadurch gekennzeichnet, dass** das wenigstens eine Lastmesselement (36) am Stoffgelenk (22) vorgesehen ist.

10. Formschließeinheit nach einem der vorhergehenden Ansprüche, **dadurch gekennzeichnet, dass** am verfahrbaren Formträger (10) quer zur Längsrichtung (L-L) wenigstens eine Materialausnehmung (28) zur Verringerung der Steifigkeit des Anlenkbereichs (20) vorgesehen ist.

11. Formschließeinheit nach einem der vorhergehenden Ansprüche, **dadurch gekennzeichnet, dass** der weitere Formträger (12) ein relativ zum Maschinenfuß (14) stationärer Formträger ist und/oder ebenfalls einen nach einem der vorhergehenden Ansprüche ausgebildeten Anlenkbereich (20) aufweist.

12. Formschließeinheit nach einem der vorhergehenden Ansprüche, **dadurch gekennzeichnet, dass** eine Höhenverstellung (30) zur Verstellung der Höhe des verfahrbaren Formträgers (10) relativ zur Linearführung (16) im Anlenkbereich (20) und/oder zwischen Lastaufnahme (18) und Schlitten (26) und/oder zwischen Schlitten (26) und Linearführung (16) und/oder zwischen den Teilen eines mehrteiligen Schlittens (26) vorgesehen ist.

13. Formschließeinheit nach Anspruch 12, **dadurch gekennzeichnet, dass** die Höhenverstellung (30') einen voreinstellbaren Höhen-Einstellbereich mit einem manuell betätigbaren Einstellhebel (42) aufweist.

## Claims

1. A mould closing unit (F) for an injection moulding machine for processing plastics and other plasticisable materials, comprising
- a machine base (14) for setting up the mould closing unit (F) stably,
- at least one mould carrier (10) which is movable in a longitudinal direction (L-L) of the mould closing unit (F) and which, between itself and a further mould carrier (12), forms a mould clamping space (C) in which parts of at least one cyclically openable and closable injection mould (M) are receivable,
- at least one linear guide (16), which is arranged on the machine base (14) in the longitudinal direction (L-L) of the mould closing unit, for guiding the at least one movable mould carrier (10) during movement in the longitudinal direction (L-L),
- at least one load-bearing part (18), which supports the at least one movable mould carrier (10) on the machine base (14) and/or on the at least one linear guide (16), which load-bearing part (18) has, above the at least one linear guide (16), a coupling region (20) for the at least one movable mould carrier (10) that is connected to the movable mould carrier, with positive engagement or by a substance-to-substance bond, and of which the rigidity is greater in the longitudinal direction (L-L) than in a direction transverse to the longitudinal direction (L-L),
**characterised in that** the load-bearing part (18) and/or the coupling region (20) take an elliptical form in cross section, wherein the smaller axis of the ellipse extends in a direction transverse to the longitudinal direction (L-L) of the mould closing unit (F).

2. A mould closing unit according to Claim 1, **characterised in that** the rigidity of the coupling region (20) is greater in the vertical direction (L-L) than in the direction transverse to the longitudinal direction (L-L).

3. A mould closing unit according to Claim 1 or 2, **characterised in that** the direction transverse to the longitudinal direction (L-L) is a horizontal direction preferably lying approximately in the plane of the longitudinal direction (L-L).

4. A mould closing unit according to one of the preceding claims, **characterised in that** the movable mould carrier (10) is supported and mounted on the linear guide (16) by way of a carriage (26) which forms the load-bearing part or on which the load-bearing part (18) is mounted.

5. A mould closing unit according to Claim 4, **characterised in that** the carriage (26) is in multiple parts and/or has a plurality of load-bearing parts (18).

6. A mould closing unit according to one of the preceding claims, **characterised in that** the movable mould carrier (10) is supported on the linear guide (16) on a plurality of support elements (34) that are at a spacing from one another in the longitudinal direction (L-L) of the mould closing unit (F).

7. A mould closing unit according to one of the preceding claims, **characterised in that** the coupling region (20) is formed by a material link (22).

8. A mould closing unit according to one of the preceding claims, **characterised in that** at least one load-measuring element (36) is provided on the load-bearing part (18) and/or the coupling region (20).

9. A mould closing unit according to Claim 7 and 8, **characterised in that** the at least one load-measuring element (36) is provided at the material link (22).

10. A mould closing unit according to one of the preceding claims, **characterised in that** at least one recess (28) in the material is provided in the movable mould carrier (10) transverse to the longitudinal direction (L-L), for the purpose of reducing the rigidity of the coupling region (20).

11. A mould closing unit according to one of the preceding claims, **characterised in that** the further mould carrier (12) is a mould carrier that is stationary in relation to the machine base (14) and/or likewise comprises a coupling region (20) constructed according to one of the preceding claims.

12. A mould closing unit according to one of the preceding claims, **characterised in that** a height adjustment part (30) is provided for adjusting the height of the movable mould carrier (10) in relation to the linear guide (16) in the coupling region (20) and/or between the load-bearing part (18) and the carriage (26) and/or between the carriage (26) and the linear guide (16) and/or between the parts of a multiple-part carriage (26).

13. A mould closing unit according to Claim 12, **characterised in that** the height adjustment part (30') has a pre-settable height setting range with a manually actuable setting lever (42).

## Revendications

1. Unité de fermeture de moule (F) pour une machine de moulage par injection pour la transformation de matières plastiques et d'autres masses plastifiables, comportant
- un pied de machine (14) pour une installation stable de l'unité de fermeture de moule (F),
- au moins un porte-moule déplaçable (10) dans une direction longitudinale (L-L) de l'unité de fermeture de moule (F), qui forme entre lui et un autre porte-moule (12) un espace de serrage de moule (C) dans lequel des parties d'au moins un moule de de moulage par injection (M) ouvrable et fermable cycliquement peuvent être reçues,
- au moins un guidage linéaire (16) disposé sur le pied de machine (14) dans la direction longitudinale (L-L) de l'unité de fermeture de moule, pour le guidage du ou des porte-moule déplaçable(s) (10) lors du déplacement dans la direction longitudinale (L-L),
- au moins un support de charge (18) supportant le ou les porte-moule déplaçable(s) (10) sur le pied de machine (14) et/ou sur le ou les guidage(s) linéaire(s) (16), lequel support de charge (18) présente au-dessus du ou des guidage(s) linéaire(s) (16) une zone d'articulation (20) pour le ou les porte-moule déplaçable(s) (10), qui est reliée en complément de forme ou de matière avec le porte-moule déplaçable et dont la rigidité est plus grande dans la direction longitudinale (L-L) que dans une direction perpendiculaire à la direction longitudinale (L-L),
**caractérisé en ce que** le support de charge (18) et/ou la zone d'articulation (20) est en forme d'ellipse en section transversale, le petit axe de l'ellipse s'étendant dans une direction perpendiculaire à la direction longitudinale (L-L) de l'unité de fermeture de moule (F).

2. Unité de fermeture de moule selon la revendication 1, **caractérisée en ce que** la rigidité de la zone d'articulation (20) est plus grande dans la direction verticale (L-L) que dans la direction perpendiculaire à la direction longitudinale (L-L).

3. Unité de fermeture de moule selon la revendication 1 ou 2, **caractérisé en ce que** la direction perpendiculaire à la direction longitudinale (L-L) est une direction horizontale, qui est de préférence sensiblement dans le plan dans lequel la direction longitudinale (L-L) se trouve.

4. Unité de fermeture de moule selon l'une des revendications précédentes, **caractérisée en ce que** le porte-moule déplaçable (10) est soutenu et maintenu sur un rail (26) sur le guidage linéaire (16), lequel rail forme le support de charge ou est joint au support de charge (18).

5. Unité de fermeture de moule selon la revendication 4, **caractérisée en ce que** le rail (26) est en plusieurs parties et/ou présente plusieurs supports de charge (18).

6. Unité de fermeture de moule selon l'une des revendications précédentes, **caractérisée en ce que** le porte-moule déplaçable (10) est soutenu sur plusieurs éléments de soutien (34) espacés les uns des autres sur le guidage linéaire (16) dans la direction longitudinale (L-L) de l'unité de fermeture de moule (F).

7. Unité de fermeture de moule selon l'une des revendications précédentes, **caractérisée en ce que** la zone d'articulation (20) est formée par une articulation en matériau (22).

8. Unité de fermeture de moule selon l'une des revendications précédentes, **caractérisée en ce qu'**au moins un élément de mesure de charge (36) est prévu au niveau du support de charge (18) et/ou de la zone d'articulation (20).

9. Unité de fermeture de moule selon la revendication 7 ou 8, **caractérisé en ce que** le ou les élément(s) de mesure de charge (36) est prévu au niveau de l'articulation en matériau (22).

10. Unité de fermeture de moule selon l'une des revendications précédentes, **caractérisée en ce qu'**il est prévu sur le porte-moule déplaçable (10), perpendiculairement à la direction longitudinale (L-L) au moins un évidement de matière (28) pour diminuer la rigidité de la zone d'articulation (20).

11. Unité de fermeture de moule selon l'une des revendications précédentes, **caractérisée en ce que** l'autre porte-moule (12) est porte-moule plus stationnaire relativement au pied de machine (14) et/ou présente également une zone d'articulation (20) selon l'une des revendications précédentes.

12. Unité de fermeture de moule selon l'une des revendications précédentes, **caractérisée en ce qu'**un réglage de hauteur (30) est prévu pour un réglage de la hauteur du porte-moule déplaçable (10) relativement au guidage linéaire (16) dans la zone d'articulation (20) et/ou entre le support de charge (18) et le rail (26) et/ou entre le rail (26) et le guidage linaire (16) et/ou entre les parties d'un rail (26) en plusieurs parties.

13. Unité de fermeture de moule selon la revendication 12, **caractérisée en ce que** le réglage de la hauteur (30') présente une zone de réglage de hauteur pré-réglable avec un levier de réglage actionnable manuellement (42).
